# EUROPEAN PATENT SPECIFICATION

(11) **EP 1 534 086 B1**
(45) Date of publication and mention of the grant of the patent: **29.06.2011**
(21) Application number: 03765182.5
(22) Date of filing: 23.07.2003
(51) Int. Cl.: A23L 1/09, A23P 1/08, A21D 13/08, A23L 1/164, A23L 1/00

(54) **BARRIER LAYER BASED ON POLYOL**
BARRIERESCHICHT AUF BASIS VON POLYOL
COUCHE BARRIERE A BASE DE POLYOL

(30) Priority: 23.07.2002 GB 0217077
(43) Date of publication of application: 01.06.2005
(73) Proprietor: MARS, INCORPORATED, McLean, Virginia 22101-3883 (US)
(72) Inventor: JOHNSTON, Andrew, Gordon, Slough SL1 4JX (GB); MEYER, Jeremy, Z., Slough SL1 4JX (GB)
(74) Representative: Marlow, Nicholas Simon
(86) International application number: PCT/GB2003/003166
(87) International publication number: WO 2004/008878

(56) References cited:
- EP-A- 0 375 240
- EP-A- 0 410 495
- WO-A-01/72134
- FR-A- 2 312 199
- FR-A- 2 580 151
- US-A- 3 477 858
- US-A- 3 552 979
- US-A- 3 556 814
- US-A- 3 769 438
- US-A- 4 146 653
- US-A- 4 260 596
- US-A- 5 824 358
- US-A- 5 989 604

## Description

The present invention relates to novel layered foodstuffs comprising two components separated by a barrier layer and to methods of making the novel layered foodstuffs.

The ingress of oxygen and migration of moisture, fat and/or other components in foodstuffs can often severely limit their shelf life. Such processes are difficult to suppress and can lead to oxidation, softening, blooming and invidious changes in taste, texture, smell and appearance of foodstuffs. The application of edible barrier layers, films or coatings to foodstuffs to obviate such problems is known in the art. These layers, films and coatings are intended to prevent, or at least reduce, either the ingress of oxygen or moisture from the atmosphere into a foodstuff or the migration of moisture, fat and/or other components between different layers or phases within a foodstuff. Typically, in foodstuffs where fat migration is likely to be an issue, rather than employing a barrier layer to obviate the problem, fat migration is avoided by manipulation of the ingredients of the foodstuff to omit or reduce the levels of those fats prone to migration.

Many known barrier layers, films or coatings suffer, however, from the disadvantages that they are difficult to apply, expensive or have an adverse effect on the taste or texture of foodstuffs to which they are applied. Furthermore, in order for known layers, films and coatings to be effective as barriers on foodstuffs it is often necessary to apply them in a thick layer, which exaggerates any detrimental effect upon the taste or texture they may have.

EP-A-0 375 240 discloses a coating for food products to reduce the rate of moisture transmission into and out of the food product. The coating comprises polyol fatty esters having at least 4 fatty ester groups.

EP-A-0 410 495 discloses a fat-based coating for food products to reduce moisture and fat migration between food products or between different layers of a food product. The coating comprises 50 to 100 % by weight of polyol fatty acid polyesters.

According to a first aspect of the present invention there is provided a layered foodstuff comprising at least two component layers separated by a barrier layer, the barrier layer being a film of a solidified melt comprising a mixture of mannitol and at least one of erythritol and isomalt, having at least 95% by weight mannitol and up to 5% by weight of erythritol or isomalt.

The two components may be completely or partially separated from one another by the barrier layer.

The barrier layer is formed by solidification of molten mixture of mannitol and erythritol or isolmalt.

Preferably, the barrier layer covers at least 70% of the interface between the two components, more preferably at least 95%.

Preferably, the thickness of the barrier layer is about 1.0mm or less, more preferably about 0.5mm or less.

Preferably, the barrier layer is substantially continuous.

Where the barrier layer is a barrier to moisture migration, preferably the polyol has a solubility at 25°C of less than about 50g/100g H₂O, more preferably less than 30g/100g H₂O.

The barrier layer may also comprise other common additives and ingredients such as colourants, flavourants, acidulants and plasticisers provided that the layer still provides an effective barrier against the migration of moisture, fat and/or other components.

According to a second aspect of the present invention there is provided a method of manufacturing a layered foodstuff according to the invention, as defined above, the method comprising: applying a molten mixture of at least 95% by weight mannitol and up to 5% by weight erythritol or isomalt to at least part of a surface of a first component layer and solidifying the molten mixture to form a film thereon; and bringing at least part of a surface of a second component layer into contact with the film.

Preferably, the molten mixture is applied to the first component by dipping the first component in the molten mixture.

The hard, close packing crystalline or amorphous glass nature of the barrier layers of the layered foodstuffs according to the invention makes them effective as protection against oxygen ingress and flavour and odour transfer.

Since the barrier layers are odourless, colourless and clear or translucent, the invention also enables barriers to be applied to foodstuffs that do not adversely affect the smell or appearance of the foodstuffs.

The thin barrier layers of the layered foodstuffs according the invention are crisp/crunchy. The invention, therefore, also enables barrier layers to be applied to foodstuffs which advantageously enhance the crisp/crunchy texture of the foodstuffs.

A number of polyols, in particular mannitol, erythritol and isomalt, have a low degree of hygroscopicity and low solubility in water. By application of a thin layer of such polyols to substrates, the method of the invention enables barriers to be formed which provide effective and lasting protection against moisture migration.

Applying a thin, for example 0.5mm or less, layer of a molten mixture of at least 95% by weight mannitol and up to 5% by weight erythritol or isomalt to substrates produces an edible thin, solid, continuous barrier which has improved mechanical strength over for example known fat-based moisture barriers.

By reducing the thickness of the layer required to produce an effective barrier, the present invention enables a barrier to be applied to foodstuffs which does not adversely affect the consumer acceptance of the foodstuffs.

The barrier layers of layered foodstuffs according to the present invention also exhibit improved temperature stability over known fat-based moisture barriers. Most fats liquify above 40°C and higher melting waxes impart an unpleasant waxy mouth feel to foodstuffs or other substrates to which they are applied. In contrast to most fats, polyols melt at high temperatures, typically above 100°C, and the water solubility of, for example, mannitol increases only slightly with temperature.

The insolubility of polyols in fats and oils makes them suitable for use as barriers against fat migration. Through the formation of solid polyol barrier layers providing effective protection against fat migration, the present invention allows the production of multi-phase or component foodstuffs containing fats which are prone to migration.

The low viscosity of molten polyols enables solid barrier layers to be formed by application of polyols to substrates by a wide variety of known techniques, such as dipping, spraying and enamelling. The low viscosity of molten polyols also aids their distribution over the surface of substrates. Consequently, solid barrier layers according to the invention are smooth and uniform.

The invention will be further described with reference to the following examples, which are not according to the invention but are incorporated for reference purposes:

### Example 1

100 cornflakes were dipped into 400g of molten mannitol at 170°C. Each flake was submerged in the molten mannitol before being removed and any excess polyol shaken off. The flakes were then allowed to cool. Cold skimmed milk was then poured onto the dipped cornflakes and also onto eight equally sized portions of untreated cornflakes.

### Example 2

300g of mannitol was added to the remaining mannitol from Example 1 and the mixture reheated to 170°C. Whole, shortbread biscuits, halved shortbread biscuits and quartered shortbread biscuits were then dipped halfway into the molten mannitol, before being removed and allowed to cool. Once cool, the other halves of the shortbread biscuits were dipped in the molten mannitol and the biscuits then removed once again and allowed to cool. The biscuits were then floated in cold skimmed milk for 10 minutes.

### Example 3

Shortbread biscuits were dipped in molten mannitol as in Example 2 and the biscuits allowed to cool. Once cool, approximately 15 holes were punched in the surface of the biscuits and half of each biscuit then submerged in hot coffee.

Example 1 produced cornflakes with a hard, continuous crystalline polyol layer over their entire surface. The polyol layer resulted in no change in the taste or sweetness of the cornflakes, but did result in a slightly crunchier texture compared to the untreated cornflakes. After 3 minutes in cold milk, the crunchiness of the untreated cornflakes began to deteriorate and after 4 minutes in cold milk the untreated cornflakes were no longer crunchy and very soggy. In contrast, after 20 minutes in cold milk the cornflakes with the polyol layer remained as crunchy as the untreated cornflakes were at the time the milk was added. After 25 minutes in cold milk, the crunchiness of the cornflakes with the polyol layer began to deteriorate, resembling that of the untreated cornflakes after 3 minutes in milk.

Example 2 produced biscuits with a hard, continuous crystalline polyol layer over their entire surface. The polyol layer resulted in no change in the taste or sweetness of the biscuits, but did result in a slightly crunchier texture. After 10 minutes floating in milk, no moisture penetration of the polyol layer was observed.

Example 3 produced biscuits with a hard, continuous crystalline polyol layer over their entire surface as in Example 2. When the biscuits were dipped in hot coffee a darkening of the biscuits beneath the barrier layer was observed, indicating the absorption of coffee into the biscuits through the holes punched through the barrier layer. The barrier layer, however, remained intact.

Although in the above Examples the substrates were coated using molten mannitol, the same techniques may be employed to coat substrates with molten mixtures of mannitol with erythritol andisomalt to form layered foodstuffs according to the invention. It will be appreciated that if molten erythritol or isomalt are used instead of molten mannitol a lower temperature may be employed due to the lower melting points of erythritol and isomalt compared to mannitol, about 124°C and 147°C respectively as compared to 167°C.

In all of the above Examples the substrates were dipped into the molten polyol in order to form the barrier layer. It will be readily appreciated that a variety of other techniques, such as spraying and enamelling, wherein the polyol is applied to the substrate as a powder and heat then applied to melt the polyol, could alternatively be employed.

While cornflakes and shortbread biscuits are employed as substrates in the Examples given above, it will be readily appreciated by those skilled in the art that barrier layers may be applied to a wide variety of other edible substrates. It will also be appreciated that while in Examples 1 and 2 the barrier layers are employed to reduce moisture migration, barrier layers could be alternatively employed to reduce fat migration, oxygen ingress or odour or flavour transfer. In addition, because of their high mechanical strength and the ease with which they can be applied, it will be appreciated that barrier layers may also be employed to prevent melt deformation or, as in Example 3, deformation due to moisture absorption.

It will also be appreciated that while in the above Examples a solid barrier layer was applied to the entire surface area of the substrate, barrier layers may be applied to only part of the surface of a substrate. This may be desirable where for example only one surface of a substrate having low water activity is exposed to a high water activity phase. For example, a barrier layer may be applied to one surface of a pizza base in order to prevent moisture migration into the base from toppings subsequently applied to that surface.

The application of a solid barrier layer to only part of the surface area of a substrate will be further illustrated with reference to the accompanying drawing in which:

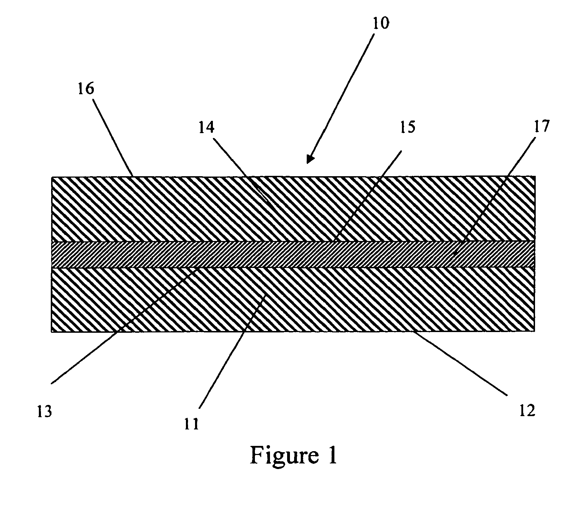

Figure 1 shows a side elevation of a layered foodstuff comprising a barrier layer according to the invention.

Figure 1 shows a layered foodstuff 10 comprising a biscuit layer 11 having a lower surface 12 and an upper surface 13, and a caramel layer 14 on top of the biscuit layer 11, having a lower surface 15, adjacent the upper surface 13 of the biscuit layer 11, and an upper surface 16. A barrier layer 17 according to the invention is applied to the upper surface 13 of the biscuit layer 11, which would otherwise be exposed to the lower surface 15 of the caramel layer 14. The barrier layer 17 reduces migration of moisture from the caramel layer 14 into the biscuit layer 11, thereby preventing the biscuit layer 11 from becoming soft and the caramel layer 14 from becoming dry and hard. The crisp, crunchy nature of the barrier layer 17 also enhances the crunchiness of the biscuit. It will be appreciated that barrier layers according to the invention could also be applied to the lower surface 12 of the biscuit layer 13 and/or upper surface 16 of the caramel layer 14 if desired, for example to prevent moisture ingress from the atmosphere into the biscuit if the lower surface 12 of the biscuit layer is exposed to the air.

Barrier layers for layered foodstuffs according to the invention may be similarly applied for example confectionery products having a coconut creme layer to reduce migration of fat from the coconut into the remainder of the confectionery, for example to prevent discolouration of a chocolate layer which would otherwise be in contact with the coconut.

Examples of possible substrates to which barrier layers could be advantageously applied include:

### To reduce moisture migration:

biscuits dispersed in ice creams;
pizza bases;
biscuit in biscuit and caramel confectionery products; and bread or pastry in prepared sandwiches, wraps and baked goods.

### To reduce fat migration:

coconut creme or fat based centres in chocolate confectionery products;
wafers in wafer products with cream fillings; and chocolate products to reduce soft fat migration driven bloom.

### To reduce deformation;

chocolate bars/blocks to resist melt deformation in hot climates;
iced confections to resist melt deformation during non-chilled transport or storage; and
biscuits to resist deformation when dunked in hot or cold beverages.

## Claims

1. A layered foodstuff comprising at least two component layers separated by a barrier layer **characterised in that** the barrier layer is a film of a solidified melt comprising a mixture of mannitol and at least one of erythritol and isomalt, having at least 95% by weight mannitol and up to 5% by weight of erythritol or isomalt.

2. A foodstuff according to claim 1 wherein the polyol has a solubility at 25°C of less than 50g/100g H₂O.

3. A foodstuff according to claim 2 wherein the polyol has a solubility at 25°C of less than 30g/100g H₂O.

4. A foodstuff according to any preceding claim wherein the barrier layer reduces migration of fat between the two components.

5. A foodstuff according to any preceding claim wherein the barrier layer reduces flavour or odour transfer between the two components.

6. A foodstuff according to any preceding claim wherein the barrier layer reduces migration of moisture between the two components.

7. A method of manufacturing a layered foodstuff according to any preceding claim, the method comprising:
applying a molten mixture of at least 95% by weight mannitol and up to 5% erythritol or isomalt to at least part of a surface of a first component layer and solidifying the molten mixture to form a film thereon; and
bringing at least part of a surface of a second component layer into contact with the film.

## Patentansprüche

1. Geschichtetes Lebensmittel, umfassend mindestens zwei durch eine Sperrschicht getrennte Bestandteilsschichten, **dadurch gekennzeichnet, dass** es sich bei der Sperrschicht um einen Film einer verfestigten Schmelze handelt, die ein Gemisch von Mannit und Erythrit und/oder Isomalz mit mindestens 95 Gewichts-% Mannit und bis zu 5 Gewichts-% Erythrit bzw. Isomalz umfasst.

2. Lebensmittel nach Anspruch 1, wobei das Polyol eine Löslichkeit bei 25 °C von weniger als 50 g/100 g H₂O hat.

3. Lebensmittel nach Anspruch 2, wobei das Polyol eine Löslichkeit bei 25 °C von weniger als 30 g/100 g H₂O hat.

4. Lebensmittel nach einem der vorangehenden Ansprüche, wobei die Sperrschicht die Migration von Fett zwischen den zwei Bestandteilen reduziert.

5. Lebensmittel nach einem der vorangehenden Ansprüche, wobei die Sperrschicht die Übertragung von Geschmack oder Geruch zwischen den zwei Bestandteilen reduziert.

6. Lebensmittel nach einem der vorangehenden Ansprüche, wobei die Sperrschicht die Migration von Feuchtigkeit zwischen den zwei Bestandteilen reduziert.

7. Verfahren des Herstellens eines geschichteten Lebensmittels nach einem der vorangehenden Ansprüche, wobei das Verfahren Folgendes umfasst:
Aufbringen eines geschmolzenen Gemischs aus mindestens 95 Gewichts-% Mannit und bis zu 5 Gewichts-% Erythrit oder Isomalz auf mindestens einen Teil einer Oberfläche einer ersten Bestandteilsschicht und Verfestigen des geschmolzenen Gemischs, um einen Film darauf zu bilden; und
Bringen mindestens eines Teils einer Oberfläche eines zweiten Bestandteils in Kontakt mit dem Film.

## Revendications

1. Denrée alimentaire à couches comprenant au moins deux couches de composants séparées par une couche barrière **caractérisée en ce que** la couche barrière est un film de masse fondue solidifiée constituée par un mélange de mannitol et par au moins un de érythritol et isomalt, contenant au moins 95% en poids de mannitol et au moins 5% en poids d'érythritol ou d'isomalt.

2. Denrée alimentaire selon la revendication 1, dans laquelle le polyol a une solubilité à 25 °C de moins de 50 g/100 g de H₂O.

3. Denrée alimentaire selon la revendication 2, dans laquelle le polyol a une solubilité à 25 °C de moins de 30 g/100 g de H₂O.

4. Denrée alimentaire selon l'une quelconque des revendications précédentes, dans laquelle la couche diminue la migration de la graisse entre les deux composants.

5. Denrée alimentaire selon l'une quelconque des revendications précédentes, dans laquelle la couche barrière diminue le transfert de saveurs ou d'odeurs entre les deux composants.

6. Denrée alimentaire selon l'une quelconque des revendications précédentes, dans laquelle la couche barrière diminue la migration de l'humidité entre les deux composants.

7. Procédé de fabrication d'une denrée alimentaire selon l'une quelconque des revendications précédentes, le procédé comprenant :
l'application d'un mélange fondu d'au moins 95% en poids de mannitol et de jusqu'à 5% d'érythritol ou d'isomalt à au moins une partie d'une surface d'une première couche de composant et solidification du mélange fondu de manière à former un film par-dessus ; et
mise en contact d'au moins une partie d'une surface d'une deuxième couche de composant avec le film.
